# EUROPÄISCHE PATENTSCHRIFT

(11) **EP 3 359 370 B1**
(45) Veröffentlichungstag und Bekanntmachung des Hinweises auf die Patenterteilung: **28.04.2021**
(21) Anmeldenummer: 16750100.6
(22) Anmeldetag: 28.07.2016
(51) Int. Cl.: B29C 53/60, B29C 53/68, B29D 23/00, F16L 58/10, F16L 11/24, F16L 55/165, F16L 55/18, B29L 23/00, B29C 53/38, B29C 63/34

(54) **VERFAHREN UND VORRICHTUNG ZUR HERSTELLUNG EINES AUSKLEIDUNGSSCHLAUCHS FÜR ROHRLEITUNGEN**
METHOD AND APPARATUS OF MANUFACTURING A LINING TUBE FOR PIPELINES
PROCÉDÉ ET DISPOSITIF POUR FABRIQUER UNE GAINE DE CHEMISAGE POUR CONDUITES

(30) Priorität: 05.10.2015 DE 102015012791
(43) Veröffentlichungstag der Anmeldung: 15.08.2018
(73) Patentinhaber: Brandenburger Liner GmbH & Co. KG, 76829 Landau/Pfalz (DE)
(72) Erfinder: BLENKE, Stefan, 76829 Landau (DE)
(74) Vertreter: Kesselhut, Wolf
(86) Internationale Anmeldenummer: PCT/EP2016/001304
(87) Internationale Veröffentlichungsnummer: WO 2017/059937

(56) Entgegenhaltungen:
- WO-A1-90/11175
- DE-A1- 19 823 714
- DE-A1-102009 022 241

## Beschreibung

Die Erfindung betrifft ein Verfahren zur Herstellung eines Auskleidungsschlauchs zur Auskleidung von Rohrleitungen sowie eine Vorrichtung zur Durchführung des Verfahrens gemäß Anspruch 1 und 7.

Auf dem Gebiet der grabenlosen Sanierung von defekten Abwasserkanälen werden zunehmend Auskleidungsschläuche eingesetzt, die als "Inliner" bezeichnet werden und aus einem Fasermaterial, insbesondere aus Glasfasergewebe bestehen, welches mit einem flüssigen Reaktionsharz getränkt ist, das nach dem Einziehen des Auskleidungsschlauchs in die Rohrleitung und Expandieren desselben mit Hilfe von Druckluft durch Licht einer Strahlungsquelle ausgehärtet wird.

Ein solcher Auskleidungsschlauch sowie ein Verfahren und eine Vorrichtung zur Herstellung eines solchen sind beispielsweise aus der DE 19823714C2 bekannt.

Die Herstellung des Auskleidungsschlauchs erfolgt dadurch, dass die harzgetränkten Faserbänder in einer Wickelvorrichtung überlappend auf einen für UV-Licht durchlässigen Innenfolienschlauch aufgewickelt werden, der zuvor auf ein Halterohr aufgezogen wird, an dessen Ende sich eine Wickelzunge befindet, über die der Innenfolienschlauch während des Wickelvorgangs abgezogen wird.

Bei der dort beschriebenen Wickelvorrichtung ergibt sich das Problem, dass das der Wickelzunge gegenüberliegende Ende des Halterohres durch insgesamt zwei Böcke abgestützt wird, die jeweils eine Klemmeinrichtung aufweisen, welche von oben und unten her auf das Halterohr wirken. Um den in höchstem Maße empfindlichen Innenfolienschlauch auf das Halterohr aufzuziehen, wird dieser durch ein abwechselndes Öffnen und Schließen der Klemmeinrichtungen abschnittsweise von dem der Wickelzungen gegenüberliegenden Ende des Rohres aus auf dieses aufgezogen, wobei es zwangsweise erforderlich ist, den Innenfolienschlauch zeitweise zwischen der Außenoberfläche des Halterohres und der Klemmeinrichtung einzuklemmen. Aufgrund des hohen Gewichts der Wickelzunge und der Länge des Halterohres kommt es hierdurch zu hohen mechanischen Belastungen des Innenfolienschlauchs. Hinzu kommt, dass das Aufziehen des Innenfolienschlauchs durch die Klemmeinrichtungen hindurch sehr zeitaufwändig ist und in der Regel nur von zwei oder mehr Personen durchgeführt werden kann. Hierbei stellt es eine Hauptschwierigkeit dar, dass der an die Wickelzunge angrenzende Teil des Halterohres, welcher während des Wickelvorgangs als Vorratsspeicher für den Schlauch dient, vergleichsweise kurz ist, wodurch die zur Verfügung stehende Länge zum Speichern des für den Wickelvorgang einsetzbaren Teils des Schlauchs stark begrenzt ist. Da der Wickelvorgang - und damit die Produktion des Auskleidungsschlauchs - jedes Mal unterbrochen werden muss, wenn ein nächster Abschnitt des Innenfolienschlauchs durch die Klemmeinrichtung hindurch auf den wickelzungenseitigen Teilabschnitt des Halterohres aufgeschoben wird, ist die Produktionsgeschwindigkeit bei der beschriebenen Vorrichtung durch die ständigen Unterbrechungen des Wickelvorgangs erheblich geringer als die bei einer kontinuierlichen Produktion maximal erreichbare Produktionsgeschwindigkeit.

Demgemäß ist es eine Aufgabe der vorliegenden Erfindung, ein Verfahren zur Herstellung eines gewickelten Auskleidungsschlauchs zur Auskleidung von Rohrleitungen zu schaffen, welches eine höhere Produktionsgeschwindigkeit ermöglicht.

Diese Aufgabe wird erfindungsgemäß durch ein Verfahren mit den Merkmalen von Anspruch 1 gelöst.

Weiterhin ist es eine Aufgabe der vorliegenden Erfindung, eine Vorrichtung zur Durchführung des Verfahrens zu schaffen, mit welcher sich ein aus harzgetränkten Faserbändern gewickelter Auskleidungsschlauch mit hoher Geschwindigkeit und hoher Qualität fertigen lässt.

Diese Aufgabe wird erfindungsgemäß durch eine Vorrichtung zur Durchführung des Verfahrens mit den Merkmalen von Anspruch 7 gelöst.

Weitere Merkmale der Erfindung sind in den Unteransprüchen beschrieben.

Gemäß der Erfindung wird bei einem Verfahren zur Herstellung eines Auskleidungsschlauchs zur Auskleidung von Rohrleitungen auf einen vorzugsweise für UV-Licht durchlässigen Innenfolienschlauch wenigstens eine Lage aus Faserbändern aufgewickelt, die mit einem Reaktionsharz getränkt sind, welches vorzugsweise durch Licht, insbesondere UV-Licht, gehärtet wird. Alternativ kann das Reaktionsharz jedoch auch ein durch Wärme, z.B. mittels Dampf oder Heißwasser, oder durch ionisierende oder sonstige elektromagnetische Strahlung, bzw. auch chemisch z.B. durch den Zusatz eines geeigneten Härters härtbares bekanntes Reaktionsharz sein.

Hierbei wird der Innenfolienschlauch auf ein fliegend gelagertes Halterohr aufgezogen, an dessen Ende eine Wickelzunge mit einer Transporteinrichtung aus vorzugsweise mehreren umlaufenden Transportbändern angeordnet ist. Die Transporteinrichtung fördert den Innenfolienschlauch während des umfänglichen Aufwickelns der Faserbänder kontinuierlich mit einer vorgegebenen Geschwindigkeit in der durch die Umlaufrichtung der Transportbänder definierten Vorschubrichtung zu einer ortsfesten Auflagefläche, die am freien Ende der Wickelzunge dieser gegenüberliegend angeordnet ist. Über die Auflagefläche hinweg wird der aus dem Innenfolienschlauch und dem Fasermaterial sowie ggf. noch weiteren Lagen bestehende Auskleidungsschlauch von der Wickelzunge abgezogen und weiter transportiert, um gewünschten Falls auf die Lage aus Fasermaterial noch wenigstens eine weitere Außenlage, z.B. aus einem für UV-Licht undurchlässigen Werkstoff aufzubringen.

Das erfindungsgemäße Verfahren zeichnet sich dadurch aus, dass der Innenfolienschlauch über das frei Ende der Wickelzunge hinweg entgegen der Vorschubrichtung auf das Halterohr aufgezogen wird.

Hierdurch ergibt sich der Vorteil, dass der Innenfolienschlauch nahezu keinen mechanischen Belastungen ausgesetzt ist, wodurch das. Risiko von mechanisch bedingten Undichtigkeiten im Innenfolienschlauch erheblich vermindert wird. Derartige Undichtigkeiten führen in der Regel dazu, dass beim Aufstellen des Auskleidungsschlauchs im zu sanierenden Kanal mithilfe von Druckluft die Druckluft durch die Undichtigkeit entweicht. Hierdurch wird das noch flüssige Reaktionsharz aus dem Fasermaterial heraus getrieben, was im schlimmsten Falle dazu fuhrt, dass der Ausschlagkleidungsschlauch im Kanal zusammenfällt und die UV-Lichtquelle während des Bestrahlungsvorgangs umschließt und aushärtet. Auf jeden Fall führt eine Undichtigkeit im Innenfolienschlauch jedoch dazu, dass die Festigkeit und Tragfähigkeit des ausgehärteten Fasermaterials aufgrund des ausgetriebenen Harzes erheblich reduziert werden und die Dichtigkeit des Auskleidungsschlauchs nicht mehr gewährleistet ist.

Obgleich das Aufziehen des Innenfolienschlauchs grundsätzlich auch ausschließlich von Hand durchgeführt werden kann, ist es nach dem erfindungsgemäßen Verfahren vorzugsweise vorgesehen, dass die Transporteinrichtung während des Aufziehvorgangs des Innenfolienschlauchs auf das Halterohr in umgekehrter Richtung, d.h. entgegengesetzt zur eigentlichen Transportrichtung während des Wickelbetriebs, angetrieben wird, um das Aufziehen zu unterstützen, bzw. vollautomatisch durchzuführen. Hierdurch ergibt sich eine erhebliche Einsparung an benötigter Zeit, bzw. an Personal, da lediglich eine Person erforderlich ist, um den Folienschlauch auf das Halterohr aufzuziehen.

Nach einem weiteren der Erfindung zugrunde liegenden Gedanken kann es ferner vorgesehen sein, dass der Innenfolienschlauch als Meterware auf einer Vorratsrolle aufgerollt ist und von der Rolle über wenigstens eine Umlenkwalze in den zwischen der Auflagefläche und dem freien Ende der Wickelzunge angeordneten Spaltbereich geführt wird, der beim Aufziehen des Innenfolienschlauchs beispielsweise eine Breite von 10 cm bis 100 cm oder auch mehr besitzen kann. Die Spaltbreite ist hierbei vorzugsweise durch Verschieben der zugehörigen Vorrichtung zur Durchführung des Verfahrens relativ zur Auflagefläche veränderbar, wobei der Abstand zum Aufziehen des Innenfolienschlauchs vor dem eigentlichen Wickelvorgang vorzugsweise vergrößert wird, um einen ungestörte Zuführung des Innenfolienschlauchs zur Spitze der Wickelzunge zu gewährleisten.

Um während des eigentlichen Wickelvorgangs sicherzustellen, dass die Höhe zwischen der Spitze der Wickelzunge und der Auflagefläche, die aufgrund der Durchbiegung des fliegend gelagerten Halterohres bei unterschiedlich schweren Auskleidungsschläuchen im Bereich von einigen Zentimetern variieren kann, stets so eingestellt ist, dass die Spitze der Wickelzunge und die Oberseite der Auflagefläche zueinander fluchten, ist der Neigungswinkel des Halterohres gegenüber der Horizontalen vorzugsweise veränderbar.

Um bei dem erfindungsgemäßen Verfahren weiterhin einen möglichst schonenden Transport des Innenfolienschlauchs sowohl beim Aufziehen auf das Halterohr, als auch beim Abziehen vom Halterrohr während des eigentlichen Wickelvorgangs zu gewährleisten, ist es nach einem weiteren der Erfindung zu Grunde liegenden Gedanken vorgesehen, auf der Oberfläche der Wickelzunge und/oder dem Halterohr ein Luftpolster zu erzeugen, auf welchem der Innenfolienschlauch in vorteilhafter Weise nahezu ohne Reibung bewegt wird. Hierzu können in der Umfangsoberfläche des Halterohres und/oder der Wickelzunge selbst Luftdüsen vorgesehen sein, die durch eine Druckluftquelle beaufschlagt werden.

Weiterhin umfasst eine Wickelvorrichtung, mit der das zuvor beschriebene Verfahren durchführbar ist, ein im Wesentlichen horizontal angeordnetes Bodenelement sowie eine auf diesem befestigte, im Wesentlichen vertikal verlaufende Halteplatte. Die Halteplatte stützt sich gegenüber dem Bodenelement über vorzugsweise zwei oder auch mehr Stützelemente, insbesondere schräg verlaufende Querstreben ab, um diese in ihrer vertikalen, bzw. im Wesentlichen vertikalen Position zu stützen. An der Halteplatte ist das zuvor bereits erwähnte Halterohr fliegend befestigt, an dessen freiem Ende die Wickelzunge vorzugsweise als separates Bauteil aufgenommen ist. Die Wickelzunge, die vorzugsweise über Schraubbolzen oder auch einen Schnellverschluss, beispielsweise einen Bajonettverschluss, am freien Ende des Halterohres lösbar befestigt ist, besitzt in ihrer Umfangsoberfläche eine Transporteinrichtung, die den Innenfolienschlauch während des Wickelvorgangs in der Vorschubrichtung des Auskleidungsschlauchs von der Wickelzunge weg transportiert. Die Transporteinrichtung umfasst hierbei wenigstens ein, vorzugsweise jedoch mehrere, beispielsweise vier, sechs oder mehr endlos umlaufende Transportbänder, die durch einen im Inneren der Wickelzunge angeordneten Antrieb, vorzugsweise einen Elektromotor, angetrieben werden. Wie bereits zuvor ausgeführt wurde, ist in einem Abstand von der Wickelzunge eine ortsfeste Auflagefläche angeordnet, auf der sich der aus dem Innenfolienschlauch sowie den aufgewickelten Faserbändern bestehende Auskleidungsschlauch bei seinem Weitertransport abstützt.

Bei der erfindungsgemäßen Vorrichtung ist es hierbei zur Aufnahme der aufgrund des Gewichts der Wickelzunge sowie der im Vergleich zu bestehenden Wickelvorrichtungen des Standes der Technik deutlich größeren Länge des Halterohres, die beispielsweise im Bereich von 3-8 m liegen kann, vorgesehen, im Inneren des Halterohres wenigstens ein stangenförmiges Spannelement anzuordnen, welches sich mit seinem einen Ende an der Innenwand oder an einer stirnseitigen Platte des Halterohres und mit seinem anderen Ende an der Halteplatte selbst abstützt. Das Spannelement kann beispielsweise als Zugseil oder auch als massiver Längsstab ausgestaltet sein und besteht in vorteilhafter Weise aus einem hochfesten Werkstoff, beispielsweise aus Edelstahl oder auch aus Kohlefasermaterial.

Durch den Einsatz eines solchen Spannelements, dessen Länge und Zugspannung beispielsweise über an der Außenseite der Halteplatte auf einen entsprechenden Gewindeabschnitt aufgeschraubte Muttern verändert werden kann, ergibt sich der Vorteil, dass Auskleidungsschläuche mit unterschiedlichen Durchmessern und Wandstärken mit ein und dem selben Halterohr gefertigt werden können, da die unterschiedlichen Durchbiegungen des Halterohres infolge der unterschiedlichen Gewichtskräfte in einfacher Weise durch Erhöhen oder Erniedrigen der Zugspannung in den Spannelementen kompensiert werden können.

Gemäß einer weiteren Ausführungsform der Erfindung stützt sich das Bodenelement über ein oder mehrere höhenveränderliche Stützelemente, insbesondere über wenigstens zwei höhenveränderbare Stützrollen, auf dem Untergrund ab, um die Neigung des Bodenelements gegenüber der Horizontalen verändern zu können. Hierdurch ergibt sich der Vorteil, dass die Wickelzunge während des Wickelvorgangs im Wesentlichen horizontal oder in einem vorgegebenen Winkel in Abwärtsrichtung geneigt ausgerichtet werden kann, wodurch sichergestellt wird, dass der Auskleidungsschlauch während des Wickelvorgangs auf der Wickelzunge durch die Transporteinrichtung nicht in Aufwärtsrichtung transportiert werden muss.

Nach einem weiteren der Erfindung zu Grunde liegenden Gedanken ist am Bodenelement wenigstens ein durch einen Motor, vorzugsweise eine Elektromotor und ein Getriebe, angetriebenes Antriebsrad angeordnet, über welches die gesamte Vorrichtung vorzugsweise auf Schienen vor- und zurück verfahren werden kann. Dies eröffnet die Möglichkeit, dass die erfindungsgemäße Vorrichtung, die beispielsweise bis zu 12 t wiegen kann, von lediglich einer Person nach Beendigung eines Wickelvorgangs von der Auflagefläche weg in eine Wechselposition verfahren werden kann, um die Wickelzunge nach dem Lösen der Bolzenverbindung, bzw. des Schnellverschlusses gegen eine Wickelzunge mit einem anderen Durchmesser auszutauschen.

Wie bereits zuvor in Verbindung mit dem erfindungsgemäßen Verfahren erwähnt wurde, werden die umlaufenden Transportbänder der Transporteinrichtung vorzugsweise durch einen elektrischen Antriebsmotor angetrieben, der sich vorzugsweise im Inneren des Halterohres befindet und die Wickelzunge vorzugsweise über eine Welle antreibt, und dessen Drehrichtung und Drehzahl über eine entsprechende Antriebssteuerung verändert werden können, um die Transportrichtung umzukehren und die Vorschubgeschwindigkeit auf einen vorgegebenen Wert einzustellen.

Die Erfindung wird nachfolgend mit Bezug auf die Zeichnungen beschrieben.

In den Zeichnungen zeigen:
Fig. 1 eine schematische räumliche Darstellung der erfindungsgemäßen Vorrichtung mit einer ausschnittsweise angedeuteten Wickelvorrichtung während des Aufziehen des Innenfolienschlauchs auf das an der Halteplatte fliegend gelagerte Halterohr ,
Fig. 2 eine schematische räumliche Darstellung der Vorrichtung von Fig. 1 während des sich anschließenden Wickelvorgangs, und
Fig. 3 eine schematische Seitenansicht der erfindungsgemäßen Vorrichtung von Fig. 1 und 2 mit demontierter Wickelzunge und im Inneren des Halterohres angedeuteten Spannelementen.

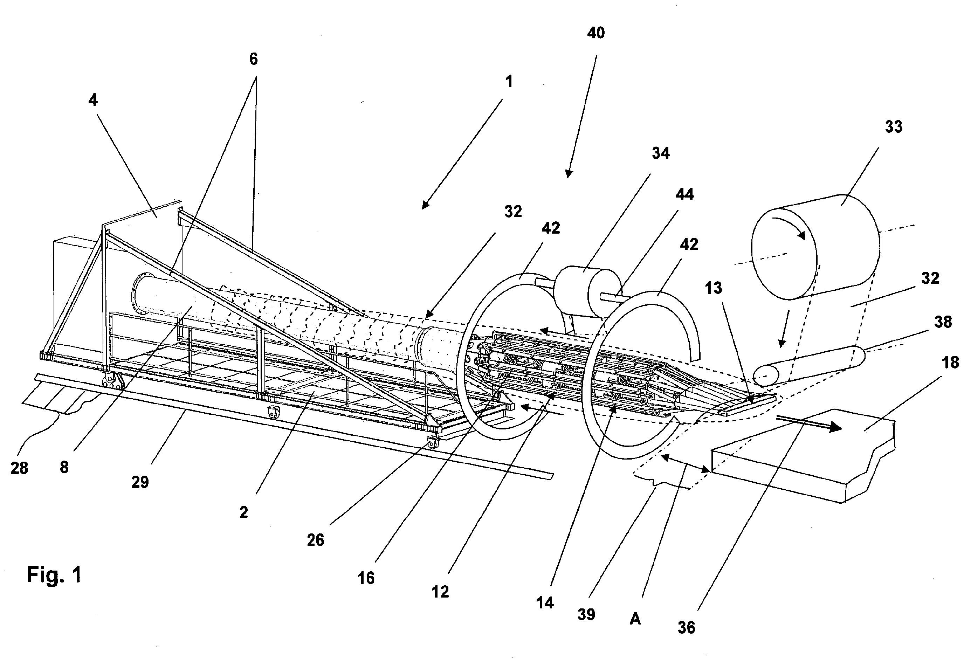

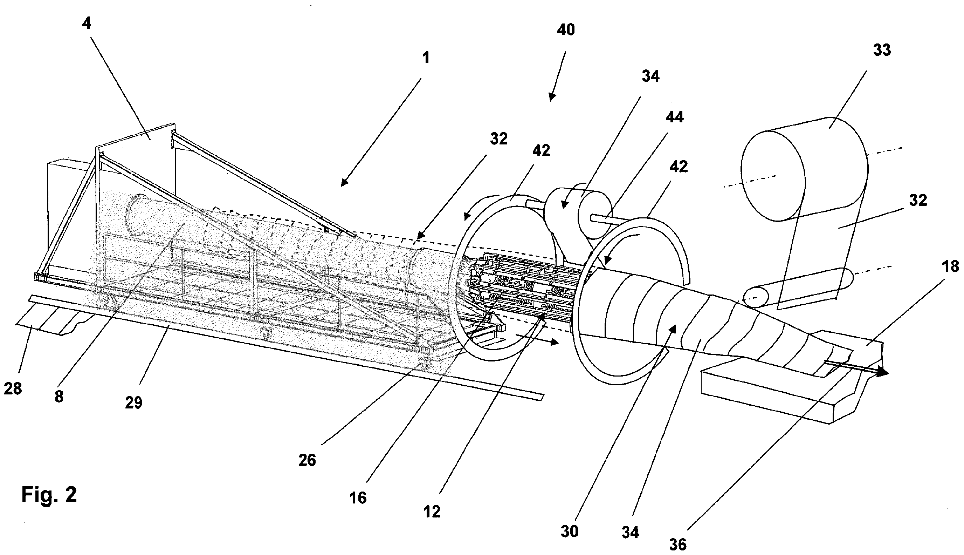

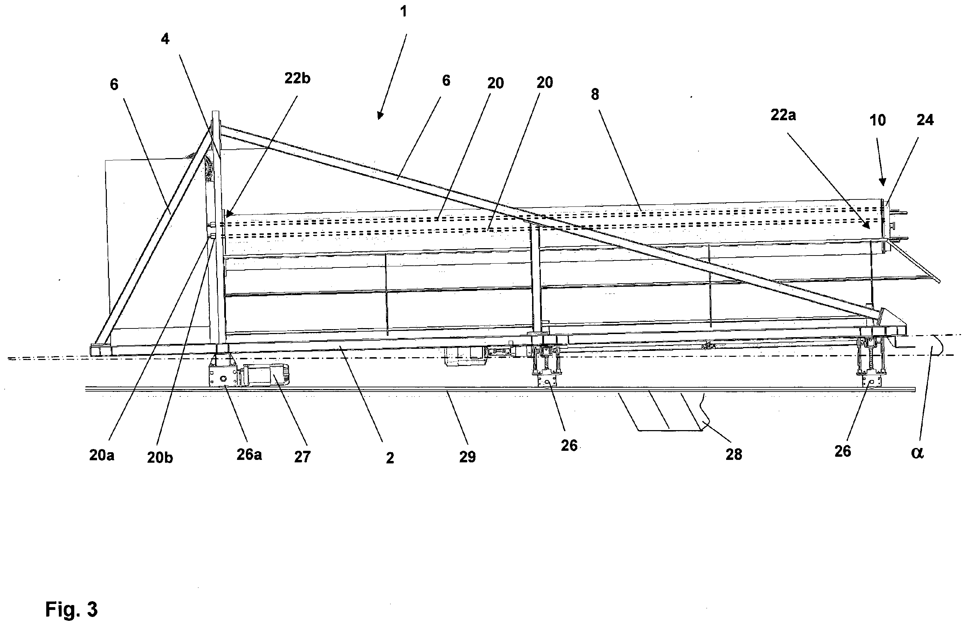

Wie in der Darstellung von Fig. 1 und 2 gezeigt umfasst eine erfindungsgemäße Vorrichtung 1 ein im Wesentlichen horizontal angeordnetes Bodenelement 2, welches beispielsweise aus Stahl gefertigt ist und an welchem eine im Wesentlichen senkrecht zum Bodenelement 2 verlaufende Halteplatte 4 befestigt ist. Die Halteplatte 4 stützt sich am Bodenelement 2 über Stützelemente in Form von beispielhaft gezeigten Querstreben 6, ab die sich beiderseits des im Wesentlichen plattenförmigen Bodenelements 2 vom oberen Ende der Halteplatte 4 aus in einem Winkel von z.B. 30° in Abwärtsrichtung bis zum Ende des Bodenelements erstrecken. An der Halteplatte 4 ist ein Halterohr 8 fliegend aufgenommen, welches sich mit seinem freien Ende 10 vorzugsweise ebenfalls bis zum Ende des Bodenelements 2 erstreckt, wie dies der Darstellung der Fig. 3 im Detail entnommen werden kann. Am freien Ende 10 des Halterohres 8 ist eine aus dem Stand der Technik bekannte Wickelzunge 12 lösbar aufgenommen, die beispielsweise über vier Gewindebolzen mit dem freien Ende 10 verbunden werden kann, auf die ein entsprechend ausgebildeter Flansch der Wickelzunge 12 aufgesteckt und mithilfe von Gewindemuttern verschraubt werden kann. Die Wickelzunge 12 besitzt in ihrer Umfangsoberfläche 14 eine Transporteinrichtung, die eine Vielzahl von um die Umfangsoberfläche herum verteilt angeordneten Transportbändern 16 umfasst, die durch einen im Inneren des Halterohres 8 angeordneten elektrischen Antriebsmotor angetrieben wird, der in den Zeichnungen aus darstellungstechnischen Gründen nicht näher gezeigt ist.

Wie der Darstellung der Figur 1 weiterhin entnommen werden kann, befindet sich die Spitze der Wickelzunge in einem Abstand A entfernt von einer ortsfesten Auflagefläche 18, die in Fig. 1 und 2 lediglich schematisch angedeutet ist. Bei der bevorzugten Ausführungsform der Erfindung befindet sich im Inneren des Halterohres 8 wenigstens ein stangenförmiges Spannelement 20, welches sich im Bereich des freien Endes 10 mit seinem einen Ende 22a an der Innenwand oder an einer stirnseitigen Platte 24 des Halterohres 8 und mit seinem anderen Ende 22b an der Halteplatte 4 abstützt, wie dies in Fig. 3 angedeutet ist. Um hierbei die Zugspannung innerhalb des stangenförmigen Spannelements verändern zu können, besitzt dieses einen in Fig. 3. schematisch angedeuteten Gewindeabschnitt 20a, der sich durch eine nicht näher bezeichnete Öffnung in der Halteplatte 4 hindurch erstreckt und auf den eine Gewindemutter 20b aufgeschraubt ist.

Wie der Darstellung der Figur 3 weiterhin entnommen werden kann, stützt sich das Bodenelement 2 über höhenveränderliche Stützelemente in Form von höhenveränderbaren Stützrollen 26 auf dem Untergrund 28 ab, um die durch den Winkel α angedeutete Neigung des Bodenelements 2, bzw. des Halterohres 8 gegenüber der Horizontalen verändern zu können. Die Stützrollen 26 sind hierbei bevorzugter Weise auf in den Untergrund 28 eingelassenen Schienen 29 geführt, auf denen die Vorrichtung 1 mit Hilfe eines elektrischen Antriebsmotors 27 vor-und zurück bewegt werden kann, der auf wenigstens ein vorzugsweise im Bereich unterhalb der Halteplatte 4 angeordnetes Antriebsrad 26a wirkt.

Nachfolgend wird das erfindungsgemäße Verfahren anhand der Darstellung der Figuren 1 und 2 näher erläutert. Wie in Figur 1 gezeigt ist, wird vor dem Beginn des eigentlichen Wickelvorgangs ein auf einer beispielsweise oberhalb der ortsfesten Auflagefläche 18 angeordneten Vorratsrolle 33 aufgerollter Innenfolienschlauch 32 aus lichtdurchlässigem Kunststoffmaterial über eine Umlenkwalze 38 abgerollt und in den Spaltbereich 39 zwischen der ortsfesten Auflagefläche 18 und dem freien Ende 13 der Wickelzunge 12 eingeführt. Dort wird das Ende des Innenfolienschlauchs durch eine Bedienperson vorzugsweise von Hand auf das freie Ende 13 der Wickelzunge 12 aufgefädelt und der Antriebsmotor der Antriebsvorrichtung eingeschaltet, der die Transportbänder 16 entgegengesetzt zur der durch den Pfeil 36 angedeuteten Vorschubrichtung des Auskleidungsschlauchs während des in Fig. 2 angedeuteten Wickelvorgangs bewegt. Die umlaufenden Transportbänder 16 ergreifen die Innenseite des Innenfolienschlauchs 32 und bewegen diesen über die Wickelzunge 12 hinweg auf das Halterohr 8, auf welchem der Schlauch fortlaufend zusammen geschoben und dadurch gespeichert wird. Wenn eine gewünschte Länge des Innenfolienschlauchs 32, z.B. 50 m oder mehr, auf das Halterohr 8 aufgezogen wurde, wird die Antriebseinrichtung 16 gestoppt, der Innenfolienschlauch 32 unterhalb der Vorratsrolle 33 in Querrichtung abgetrennt und das dadurch entstehende freie offene Ende des Innenfolienschlauchs 32 über die Auflagefläche 18 hinweg gezogen und in den Walzenspalt eines nicht näher gezeigten Zugwalzenpaares eingeführt, welches den Innenfolienschlauch 32 mit dem wenigstens einen aufgewickelten Faserband 34 bei dem sich anschließenden Wickelvorgang in der Vorschubrichtung 36 bewegt.

Das Aufziehen des Innenfolienschlauchs 32 auf das Halterohr 8 kann zusätzlich dadurch unterstützt werden, dass der Innenfolienschlauch 32 auf einem Luftpolster über die Wickelzunge 12 und/oder das Halterohr 8 bewegt wird. Hierzu können in der Umfangsoberfläche 14 des Halterohres 8, bzw. im Einlaufbereich der Wickelzunge 12 in den Zeichnungen nicht näher bezeichnete Luftaustrittsöffnungen angeordnet sein, durch die Blasluft austritt.

In dem sich anschließenden Wickelvorgang wird der Innenfolienschlauch 32 dann durch die nicht näher gezeigte Zugwalzenanordnung in Richtung des Pfeils 36 bewegt und gleichzeitig die mit der Bezugsziffer 40 bezeichnete Wickelvorrichtung aktiviert. Diese umfasst neben der Vorrichtung 1 und der Wickelzunge 12 einen ersten und zweiten schematisch angedeuteten und durch einen nicht näher gezeigten Motor in Richtung der umfänglichen Pfeile rotierbaren Ring 42, zwischen denen wenigstens eine verschränkt zur gemeinsamen Drehachse der beiden Kreisringe 42 verlaufende Achse 44 aufgenommen ist. Auf der Achse 44 ist eine Rolle aus Faserband 34 drehbar angeordnet, welches mit einem flüssigen Reaktionsharz getränkt ist, das insbesondere durch Bestrahlung mit UV-Licht ausgehärtet werden kann. Wie in der Darstellung der Fig. 2 angedeutet ist, wird das Faserband 34 in bekannter Weise überlappend auf den in der Vorschubrichtung 26 abgezogenen Innenfolienschlauch 32 aufgewickelt, wodurch ein erfindungsgemäßer Auskleidungsschlauch 30 fortlaufend erzeugt wird, der im Anschluss daran mit einer lichtundurchlässigen Folie ummantelt werden kann, bevor dieser zur Aushärtung in ein zu sanierendes Rohr, bzw. einen zu sanierenden Kanal, eingezogen wird.
- 1: Vorrichtung
- 2: Bodenelement
- 4: Haltplatte
- 6: Stützelement
- 8: Halterohr
- 10: Freies Ende des Halterohres
- 12: Wickelzunge
- 13: freies Ende der Wickelzunge
- 14: Umfangsoberfläche der Wickelzunge
- 16: Transportelement
- 18: Ortsfeste Auflagefläche
- 20: Stangenförmiges Spannelement
- 20a: Gewindeabschnitt des stangenförmigen Elements
- 20b: Gewindemutter
- 22a: Erstes Ende des stangenförmigen Wickelelements
- 22b: Zweites Ende des Spannelements
- 24: Stirnseitige Platte des Halterohres
- 26: Höhenveränderliches Stützelement/Stützrolle
- 26a: Antriebsrad
- 27: Antriebsmotor
- 28: Untergrund
- 30: Auskleidungsschlauch
- 32: Innenfolienschlauch
- 33: Vorratsrolle
- 34: Faserband
- 36: Vorschubrichtung
- 38: Umlenkwalze
- 39: Spaltbereich
- 40: Wickelvorrichtung
- 42: Kreisringe der Wickelvorrichtung
- 44: Achse zur Aufnahme der Faserbandrolle
- A: Abstand zwischen Auflagefläche und freiem Ende der Wickelzunge
- α: Neigungswinkel des Bodenelements gegenüber der Horizontalen

## Patentansprüche

1. Verfahren zur Herstellung eines Auskleidungsschlauchs (30) zur Auskleidung von Kanälen und Rohrleitungen, welcher einen umfänglich geschlossenen Innenfolienschlauch (32) und wenigstens ein auf den Innenfolienschlauch (32) aufgewickeltes, mit einem härtbaren Reaktionsharz getränktes Faserband (34) umfasst, wobei der Innenfolienschlauch (32) in einer Wickelvorrichtung (40) auf ein fliegend gelagertes Halterohr (8) aufgezogen wird, an dessen Ende (10) eine Wickelzunge (12) mit einer Transporteinrichtung (16) angeordnet ist, welche den Innenfolienschlauch (32) während des umfänglichen Aufwickelns der Faserbänder (34) in einer Vorschubrichtung (36) zu einer nahe dem freien Ende (13) der Wickelzunge (12) angeordneten ortsfesten Auflagefläche (18) transportiert, über die der Auskleidungsschlauch (30) weiter gefördert wird, wobei der Innenfolienschlauch (32) über das freie Ende (13) der Wickelzunge (12) hinweg entgegen der Vorschubrichtung (36) auf das Halterohr (8) aufgezogen wird.

2. Verfahren nach Anspruch 1, wobei die Transporteinrichtung (16) während des Aufziehens des Innenfolienschlauchs (32) entgegengesetzt zur Vorschubrichtung (36) bewegt wird, um den Innenfolienschlauch (32) zu ergreifen und in Richtung zum Halterohr (8) hin zu transportieren.

3. Verfahren nach einem der vorhergehenden Ansprüche, wobei der Innenfolienschlauch (32) zu einer Vorratsrolle (33) aufgerollt ist und von dieser über wenigstens eine Umlenkwalze (38) in einem zwischen der Auflagefläche (18) und dem freien Ende (10) der Wickelzunge (12) angeordneten Spaltbereich (39) geführt wird.

4. Verfahren nach einem der vorhergehenden Ansprüche, wobei der Neigungswinkel (α) des Halterohres (8) gegenüber der Horizontalen veränderbar ist.

5. Verfahren nach Anspruch 4, wobei der zwischen der Auflagefläche (18) und dem freien Ende (10) der Wickelzunge (12) angeordnete Spaltbereich (39) vor dem Aufziehen des Innenfolienschlauchs (32) auf das Halterohr (8) durch Anheben oder Absenken des Halterohres (8) vergrößert wird.

6. Verfahren nach einem der vorhergehenden Ansprüche, wobei der Innenfolienschlauch (32) auf einem Luftpolster über die Wickelzunge (12) und/oder das Halterohr (8) bewegt wird.

7. Vorrichtung (1) zur Durchführung des Verfahrens nach einem der vorhergehenden Ansprüche, umfassend eine Wickelvorrichtung (40), ein im Wesentlichen horizontal angeordnetes Bodenelement (2) sowie eine auf diesem befestigte, im Wesentlichen vertikal verlaufende Halteplatte (4), welche sich gegenüber dem Bodenelement (2) über Stützelemente (6), insbesondere Querstreben, abstützt, sowie ein an der Halteplatte (4) fliegend befestigtes Halterohr (8), an dessen freiem Ende (10) eine Wickelzunge (12) mit einer in deren Umfangsoberfläche (14) aufgenommenen endlos umlaufendem Transporteinrichtung (16) befestigt ist wobei im Inneren des Halterohres (8) wenigstens ein stangenförmiges Spannelement (20) angeordnet ist, welches sich mit seinem einen Ende (22a) an der Innenwand oder in einer stirnseitigen Platte (24) des Halterohres (8) und mit seinem anderen Ende (22b) an der Halteplatte (4) abstützt.

8. Vorrichtung nach Anspruch 7, wobei sich das Bodenelement (2) über ein oder mehrere höhenveränderliche Stützelemente (26), insbesondere über höhenveränderbare Stützrollen, auf dem Untergrund (28) abstützt, um die Neigung (α) des Bodenelements (2) gegenüber der Horizontalen zu verändern.

9. Vorrichtung nach einem der Ansprüche 7 oder 8, wobei das Bodenelement (2) über wenigstens ein motorisch angetriebenes Antriebsrad (27) verfahrbar ist.

10. Vorrichtung nach einem der Ansprüche 7 bis 9, wobei die endlos umlaufende Transporteinrichtung (16) durch einen elektrischen Antriebsmotor angetrieben wird, dessen Drehrichtung zur Umkehrung der Transportrichtung (36) umkehrbar ist.

11. Vorrichtung nach einem der Ansprüche 7 bis 10, wobei ein Innenfolienschlauch (32) von einer oberhalb oder unterhalb der ortsfesten Auflagefläche (18) angeordneten Vorratsrolle (33) abgerollt und über wenigstens eine Umlenkwalze (38) im Spaltbereich (39) zwischen einer ortsfesten Auflagefläche (18) und dem freien Ende der Wickelzunge (12) geführt wird.

## Claims

1. Method for producing a lining sleeve (30) for lining channels and pipelines, which comprises a circumferentially closed inner film sleeve (32) and at least one fibre band (34) wound onto the inner film sleeve (32) and impregnated with a curable reactive resin, wherein the inner film sleeve (32), in a winding apparatus (40), is pulled onto a holding tube (8) mounted in an overhung manner, at the end (10) of which holding tube there is arranged a winding tongue (12) with a transport device (16), which, during the circumferential winding of the fibre bands (34), transports the inner film sleeve (32) in a direction of advancement (36) to a positionally fixed bearing surface (18) which is arranged close to the free end (13) of the winding tongue (12) and over which the lining sleeve (30) is conveyed further,
wherein the inner film sleeve (32) is pulled over the free end (13) of the winding tongue (12) onto the holding tube (8) counter to the direction of advancement (36).

2. Method according to Claim 1,
wherein, during the pulling-on of the inner film sleeve (32), the transport device (16) is moved in the direction opposite the direction of advancement (36) so as to grip the inner film sleeve (32) and transport it in the direction of the holding tube (8).

3. Method according to either of the preceding claims,
wherein the inner film sleeve (32) is rolled up into a supply roll (33) and is guided therefrom, via at least one deflection roller (38), in a gap region (39) arranged between the bearing surface (18) and the free end (10) of the winding tongue (12).

4. Method according to one of the preceding claims,
wherein the angle of inclination (a) of the holding tube (8) with respect to the horizontal can be varied.

5. Method according to Claim 4,
wherein, prior to the inner film sleeve (32) being pulled onto the holding tube (8), the gap region (39) arranged between the bearing surface (18) and the free end (10) of the winding tongue (12) is enlarged through lifting or lowering of the holding tube (8).

6. Method according to one of the preceding claims,
wherein the inner film sleeve (32) is moved over the winding tongue (12) and/or the holding tube (8) on an air cushion.

7. Device (1) for carrying out the method according to one of the preceding claims, comprising a winding apparatus (40), a substantially horizontally arranged base element (2) and a substantially vertically extending holding plate (4) which is fastened to said base element and which, in relation to the base element (2), is supported via support elements (6), in particular transverse struts, and comprising a holding tube (8) fastened to the holding plate (4) in an overhung manner, to the free end (10) of which holding tube there is fastened a winding tongue (12) with an endlessly circulating transport device (16) accommodated in its circumferential surface (14),
wherein, in the interior of the holding tube (8), there is arranged at least one rod-like tension element (20), which is supported at its one end (22a) at the inner wall or in a face-side plate (24) of the holding tube (8) and at its other end (22b) at the holding plate (4).

8. Apparatus according to Claim 7,
wherein the base element (2) is supported on the underlying surface (28) via one or more height-adjustable support elements (26), in particular via height-adjustable support rollers, in order to vary the inclination (a) of the base element (2) in relation to the horizontal.

9. Apparatus according to either of Claims 7 and 8,
wherein the base element (2) can be moved via at least one motor-driven drive wheel (27).

10. Device according to one of Claims 7 to 9,
wherein the endlessly circulating transport device (16) is driven by an electric drive motor, whose direction of rotation can be reversed for the purpose of reversing the direction of transport (36).

11. Device according to one of Claims 7 to 10,
wherein an inner film sleeve (32) is unrolled from a supply roll (33) arranged above or below the positionally fixed bearing surface (18) and is guided, via at least one deflection roller (38), in the gap region (39) between a positionally fixed bearing surface (18) and the free end of the winding tongue (12) .

## Revendications

1. Procédé de production d'un tube de revêtement (30) qui est destiné au revêtement de canaux et de canalisations et qui comprend un tube de film intérieur (32) fermé circonférentiellement et au moins une bande fibreuse (34) imprégnée d'une résine de réaction durcissable et enroulée sur le tube de film intérieur (32), le tube de film intérieur (32) étant tiré dans un moyen d'enroulement (40) sur un tube de retenue (8) qui est monté en porte-à-faux et à l'extrémité (10) duquel une languette d'enroulement (12) est disposée avec un moyen de transport (16) qui transporte le tube de film intérieur (32) pendant l'enroulement circonférentiel des bandes fibreuses (34) dans un sens d'alimentation (36) vers une surface d'appui fixe (18) qui est disposée près de l'extrémité libre (13) de la languette d'enroulement (12) sur laquelle le tube de revêtement (30) est en outre transporté,
le tube de film intérieur (32) étant tiré sur le tube de retenue (8) au-delà de l'extrémité libre (13) de la languette d'enroulement (12) dans le sens opposé au sens d'alimentation (36).

2. Procédé selon la revendication 1,
le moyen de transport (16) étant déplacé dans le sens opposé au sens d'alimentation (36) pendant que le tube de film intérieur (32) est tiré afin de saisir le tube de film intérieur (32) et de le transporter en direction du tube de retenue (8).

3. Procédé selon l'une des revendications précédentes,
le tube de film intérieur (32) étant enroulé de façon à former un rouleau d'alimentation (33) et étant guidé à partir de celui-ci, par le biais d'au moins un rouleau de déviation (38), dans une zone d'écartement (39) située entre la surface d'appui (18) et l'extrémité libre (10) de la languette d'enroulement (12).

4. Procédé selon l'une des revendications précédentes,
l'angle d'inclinaison (α) du tube de retenue (8) par rapport à l'horizontale pouvant être modifié.

5. Procédé selon la revendication 4,
la zone d'écartement (39) située entre la surface d'appui (18) et l'extrémité libre (10) de la languette d'enroulement (12) étant agrandie par soulèvement ou abaissement du tube de retenue (8) avant de tirer le tube de film intérieur (32) sur le tube de retenue (8).

6. Procédé selon l'une des revendications précédentes,
le tube de film intérieur (32) étant déplacé sur un coussin d'air au-dessus de la languette d'enroulement (12) et/ou du tube de maintien (8).

7. Dispositif (1) destiné à la mise en œuvre du procédé selon l'une des revendications précédentes, ledit dispositif comprenant un dispositif d'enroulement (40), un élément de fond (2) disposé sensiblement horizontalement et une plaque de retenue (4) qui s'étend sensiblement verticalement et qui est supportée en vis-à-vis de l'élément de fond (2) par des éléments de support (6), notamment des traverses, ainsi qu'un tube de retenue (8) qui est monté en porte-à-faux sur la plaque de retenue (4) et à l'extrémité libre (10) duquel une languette d'enroulement (12) est fixée avec un moyen de transport (16) à circulation sans fin reçu dans la surface circonférentielle (14)) de celle-ci,
au moins un élément de serrage (20) en forme de tige étant disposé à l'intérieur du tube de retenue (8) et s'appuyant avec l'une de ses extrémités (22a) sur la paroi intérieure ou dans une plaque frontale (24) du tube de retenue (8) et avec l'autre de ses extrémités (22b) sur la plaque de retenue (4).

8. Dispositif selon la revendication 7,
l'élément de fond (2) s'appuyant sur le sol (28) par le biais d'un ou plusieurs éléments d'appui (26) réglables en hauteur, en particulier des rouleaux de support réglables en hauteur, afin de modifier l'inclinaison (a) de l'élément de fond (2) par rapport à l'horizontale.

9. Dispositif selon l'une des revendications 7 ou 8, l'élément de fond (2) pouvant être déplacé par le biais d'au moins une roue d'entraînement (27) entraînée par moteur.

10. Dispositif selon l'une des revendications 7 à 9,
le moyen de transport (16) à circulation sans fin étant entraîné par un moteur d'entraînement électrique dont le sens de rotation peut être inversé pour inverser le sens de transport (36).

11. Dispositif selon l'une des revendications 7 à 10, un tube de film intérieur (32) étant déroulé d'un rouleau d'alimentation (33) disposé au-dessus ou au-dessous de la surface d'appui fixe (18) et étant guidé par le biais d'au moins un rouleau de déviation (38) situé dans la zone d'écartement (39) entre une surface d'appui fixe (18) et l'extrémité libre de la languette d'enroulement (12).
